(19) Europäisches Patentamt
European Patent Office
Office européen des brevets

(11) **EP 2 894 553 A2**

(12) **EUROPEAN PATENT APPLICATION**
published in accordance with Art. 153(4) EPC

(43) Date of publication:
**15.07.2015 Bulletin 2015/29**

(51) Int Cl.:
***G06F 3/048*** (2013.01)

(21) Application number: **13794109.2**

(86) International application number:
**PCT/CN2013/079955**

(22) Date of filing: **24.07.2013**

(87) International publication number:
**WO 2013/174329 (28.11.2013 Gazette 2013/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.09.2012 CN 201210323177**

(71) Applicant: **ZTE Corporation**
**Shenzhen, Guangdong 518057 (CN)**

(72) Inventors:
• **GAO, Minggang**
**Shenzhen**
**Guangdong 518057 (CN)**

• **NI, Qingyu**
**Shenzhen**
**Guangdong 518057 (CN)**
• **WANG, Zhuo**
**Shenzhen**
**Guangdong 518057 (CN)**

(74) Representative: **Bongiovanni, Simone et al**
**Studio Torta S.p.A.**
**Via Viotti, 9**
**10121 Torino (IT)**

(54) **TEXT PROCESSING METHOD AND DEVICE**

(57)     Provided are a text processing method and device. The method includes: determining that a period during which a text area on a touch screen is touched reaches a threshold value; amplifying and displaying the text in the text area on the touch screen corresponding to the text area; and according to an operation detected in an amplified display area, processing the text in the text area. The present invention solves the technical problem in the related art that the probability of unintended operations of a user is increased due to the fact that the text displayed on a display screen is too small, and achieves the technical effect of reducing the possibility of unintended operations occurring when a user locates or selects the text.

Fig. 1

EP 2 894 553 A2

**Description**

**Technical Field**

The present invention relates to the field of communications, in particular to a text processing method and device.

**Background**

With the rise of smart phones and other smart products, touch screen input modes have become increasingly popular. In spite of the convenience in the use by people, much inconvenience also exists in the use of touch screen input modes. For example, a touch screen does not have the sense of touch on a keypad machine, and often results in the situation where a finger touches a plurality of keys on a very small screen, thus leading to an unnecessary input operation.

In addition, during text selection, because the font size is much smaller than the area of a finger in general conditions, the situation where a finger covers several characters will occur, thereby making it difficult to accurately locate the start position and end position of the characters in the part of the content which needs to be selected. It usually requires repeated pressing several times before the locating succeeds, thus bringing great inconvenience to the user.

Regarding the above-mentioned problem, no effective solution has been presented.

**Summary**

Provided in the embodiments of the present invention are a text processing method and device, so as to at least solve the technical problem in the related art that the probability of unintended operations of a user is increased due to the fact that the text displayed on a display screen is too small.

According to one embodiment of the present invention, a text processing method is provided, including: determining that a period during which a text area on a touch screen is touched reaches a threshold value; amplifying and displaying text in the text area on the touch screen corresponding to the above-mentioned text area; and according to an operation detected in an amplified display area, processing the text in the above-mentioned text area.

In the described embodiment, amplifying and displaying the text in the text area on the touch screen corresponding to the above-mentioned text area includes: determining an actually obscured area of the touch screen according to a radius of the touched text area; and amplifying and displaying the text in the above-mentioned actually obscured area.

In the described embodiment, the determining the actually obscured area of the touch screen according to the radius of the touched text area includes: determining the radius of the above-mentioned touched text area; taking a sum of the radius of the above-mentioned touched text area and a predetermined value as the radius of the actually obscured area; and taking a corresponding circle, which takes a centre of the above-mentioned touched text area as an origin and takes the radius of the above-mentioned actually obscured area as a radius, as the above-mentioned actually obscured area.

In the described embodiment, the processing the text in the above-mentioned text area according to the operation detected in the amplified display area includes: when it is detected that a fixed area of the above-mentioned amplified display area is touched and a subsequent position of the fixed area is not touched, locating and displaying the text corresponding to the above-mentioned fixed area in a corresponding position of the above-mentioned text area; or when it is detected that a continuous area of the above-mentioned amplified display area is touched, performing a predetermined display operation on continuous text corresponding to the above-mentioned continuous area in corresponding positions of the above-mentioned text area and/or taking the above-mentioned continuous text as selected text.

In the described embodiment, the locating and displaying include moving a cursor position to the front of the text corresponding to the above-mentioned fixed area in the above-mentioned text area, and the above-mentioned predetermined display operation includes highlighted display.

In the described embodiment, the amplifying and displaying the text in the text area on the touch screen corresponding to the above-mentioned text area includes: determining a proportion for amplifying and displaying the above-mentioned text according to an area of the currently touched text area and an area of the amplified display area; and amplifying and displaying the above-mentioned text according to the above-mentioned proportion for amplifying and displaying the text.

According to another embodiment of the present invention, a text processing device is provided, including: a determination unit configured to determine that a period during which a text area on a touch screen is touched reaches a threshold value; a display unit configured to amplify and display text in the text area on the touch screen corresponding to the above-mentioned text area; and a processing unit configured to process the text in the above-mentioned text area according to an operation detected in an amplified display area.

In the described embodiment, the above-mentioned display unit includes: a determination module configured to determine an actually obscured area of the touch screen according to a radius of the touched text area; and a display module configured to amplify and display the text in the above-mentioned actually obscured area.

In the described embodiment, the determination module includes: a determination submodule configured to determine the radius of the above-mentioned touched text area; an addition submodule configured to take a sum of the radius of the above-mentioned touched text area and a predetermined value as the radius of the actually obscured area; and a calculation submodule configured to take a corresponding circle, which takes a centre of the above-mentioned touched text area as an origin and takes the radius of the above-mentioned actually obscured area as a radius, as the above-mentioned actually obscured area.

In the described embodiment, the above-mentioned processing unit includes: a locating and displaying module configured to locate and display text corresponding to a fixed area in a corresponding position of the above-mentioned text area when it is detected that the above-mentioned fixed area of the above-mentioned amplified display area is touched and a subsequent position of the fixed area is not touched; or a selection module configured to, when it is detected that a continuous area of the above-mentioned amplified display area is touched, perform a predetermined display operation on continuous text corresponding to the above-mentioned continuous area in corresponding positions of the above-mentioned text area and/or take the above-mentioned continuous text as selected text.

In the embodiments of the present invention, when it is detected that a user is performing a locating or selecting operation on text in a text area on a touch screen, the text in the part of text area which is touched by the user is amplified and displayed, and then corresponding processing is performed on the text according to an operation of the user in an amplified area. The above-mentioned method solves the technical problem in the related art that the probability of unintended operations of a user is increased due to the fact that the text displayed on a display screen is too small, and achieves the technical effect of reducing the possibility of unintended operations occurring when a user locates or selects the text.

**Brief Description of the Drawings**

Drawings, provided for further understanding of the present invention and forming a part of the specification, are used to explain the present invention together with embodiments of the present invention rather than to limit the present invention. In the drawings:

Fig. 1 is an example flowchart of a text processing method according to an embodiment of the present invention;
Fig. 2 is another example flowchart of the text processing method according to an embodiment of the present invention;
Fig. 3 is an example structure diagram of a text processing device according to an embodiment of the present invention;
Fig. 4 is another example structure diagram of the text processing device according to an embodiment of the present invention;
Fig. 5 is yet another example structure diagram of the text processing device according to an embodiment of the present invention;
Fig. 6 is yet another example flowchart of the text processing method according to an embodiment of the present invention;
Fig. 7 is a schematic diagram of a touch area and an actually obscured area according to an embodiment of the present invention;
Fig. 8 is a schematic diagram showing a transformation between coordinate systems according to an embodiment of the present invention;
Fig. 9 is an example flowchart of text location according to an embodiment of the present invention; and
Fig. 10 is an example flowchart of text selection according to an embodiment of the present invention.

**Detailed Description of the Embodiments**

The present invention is described below with reference to the accompanying drawings and embodiments in detail. Note that, the embodiments of the present invention and the features of the embodiments can be combined with each other if there is no conflict.

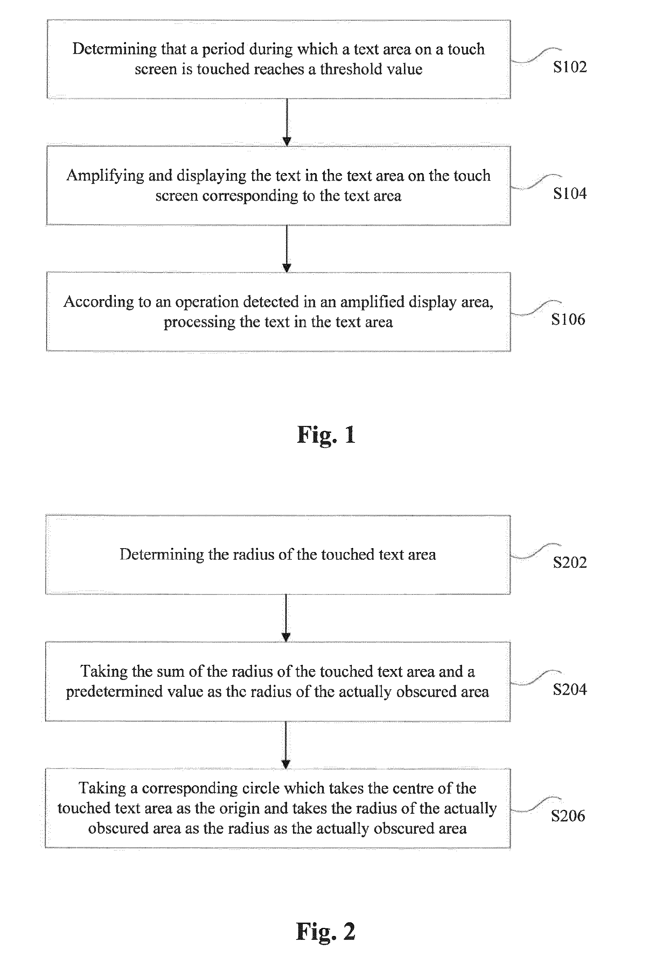

An example embodiment of the present invention provides a text processing method, which, as shown in Fig. 1, includes the following steps.

Step S102: it is determined that a period during which a text area on a touch screen is touched reaches a threshold value.

Step S104: the text in the text area on the touch screen corresponding to the text area is amplified and displayed.

Step S106: the text in the text area is processed according to an operation detected in an amplified display area.

In the above-mentioned example embodiment, when it is detected that a user is performing a locating or selecting operation on the text in a text area on a touch screen, the part of text in the text area which is touched by the user is amplified and displayed, and then corresponding processing is performed on the text according to an operation of the user in an amplified area. The above-mentioned method solves the technical problem in the related art that the probability of unintended operations of a user is increased due to the fact that the text displayed on a display screen is too small, and achieves the technical effect of reducing the possibility of unintended operations occurring when a user locates or selects the text.

Taking into account the fact that some errors may exist when the user locates or selects the text by means of finger touch, in order to reduce the impact caused by such errors, the text corresponding to the area which is obscured by the finger may be amplified and displayed, so as to avoid, to a certain degree, the problem that it is difficult to express the real intention of the user during operations such as amplification and display due to inaccuracies of the user's finger touch. In an example embodiment, amplifying and displaying the text in the text area on the touch screen corresponding to the text area may be performed in the following manner. An actually obscured area of the touch screen is determined according to the radius of the touched text area; and the text in the actually obscured area is amplified and displayed.

For the determination of the obscured area, the coverage area, of which the radius is the sum of a predetermined value and the radius of the touch area, may be used as the obscured area. For example, the method shown in Fig. 2 may be used to determine the actually obscured area, which specifically includes the following steps.

Step S202: the radius of the touched text area is determined.

Step S204: the sum of the radius of the touched text area and a predetermined value is taken as the radius of the actually obscured area.

Step S206: a corresponding circle which takes the centre of the touched text area as the origin and takes the radius of the actually obscured area as the radius is taken as the actually obscured area.

The general operations of a user on the text mainly include two types: one is to locate the text, and the other is to select a text string. For these two different cases, the embodiments of the present invention provide different processing modes, and specifically, the following mode may be adopted to realize the processing of the text in the text area according to an operation detected in the amplified display area:

when it is detected that a fixed area of the amplified display area is touched and a subsequent position of the fixed area is not touched (it can be judged that the user may want to locate the text), the text corresponding to the fixed area is located and displayed in a corresponding position of the text area, that is, the cursor may be placed in front of the text corresponding to the touched area; or

when it is detected that a continuous area of the amplified display area is touched (it can be judged that the user may want to select continuous text), a predetermined display operation is performed on the continuous text corresponding to the continuous area in corresponding positions of the text area and/or the continuous text is taken as the selected text, that is, the continuous text may be displayed in highlight or the continuous text may be taken as the text which is already duplicated.

In an example embodiment, the above-mentioned locating and displaying may include moving a cursor position to the front of the text corresponding to the fixed area in the text area, and the above-mentioned predetermined display operation may include highlighted display.

In order to ensure a good amplification display effect, the magnification of amplification display may be determined according to a certain proportion. For example, the amplification proportion may be determined based on a conversion relation between the size of the touch screen itself and the size of the text in the selected area. In an example embodiment, amplifying and displaying the text in the text area on the touch screen corresponding to the text area may include: determining a proportion for amplifying and displaying the text according to the area of the currently touched text area and the area of the amplified display area; and amplifying and displaying the text according to the proportion for amplifying and displaying the text.

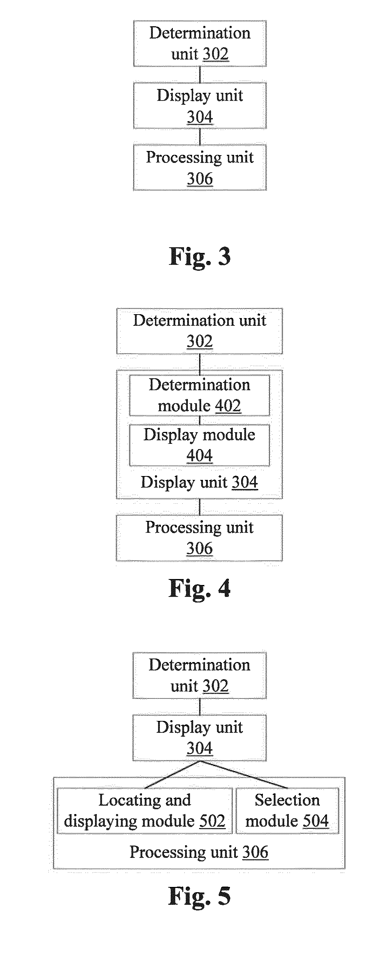

A text processing device is provided in another embodiment, which is used to implement the above-mentioned embodiment and the example embodiments, and those that have been described before will not be described again. As used below, the term "unit" or "module" may implement the combination of the software and/or hardware of a predetermined function. Although the device described in the following embodiments may be implemented in software, the implementation of hardware, or a combination of software and hardware is also possible and is contemplated. Fig. 3 is an example structure diagram of a text processing device according to an embodiment of the present invention, which, as shown in Fig. 3, includes: a determination unit **302,** a display unit **304,** and a processing unit **306.** The structure will be described below.

The determination unit **302** is configured to determine that a period during which a text area on a touch screen is touched reaches a threshold value.

The display unit **304** is coupled to the determination unit **302** and is configured to amplify and display the text in the text area on the touch screen corresponding to the text area.

The processing unit **306** is coupled to the display unit **304** and is configured to process the text in the text area according to an operation detected in an amplified display area.

In an example embodiment, as shown in Fig. 4, the display unit **304** may include: a determination module **402** coupled to the determination unit **302** and configured to determine an actually obscured area of the touch screen according to the radius of the touched text area; and a display module **404** coupled to the determination module **402** and configured to amplify and display the text in the actually obscured area.

In an example embodiment, the above-mentioned determination module may include: a determination submodule configured to determine the radius of the touched text area; an addition submodule configured to take the sum of the radius of the touched text area and a predetermined value as the radius of the actually obscured area; and a calculation submodule configured to take a corresponding circle, which takes the centre of the touched text area as the origin and takes the radius of the actually obscured area as the radius, as the actually obscured area.

In an example embodiment, as shown in Fig. 5, the processing unit **306** may include: a locating and displaying module **502** coupled to the display unit **304** and configured to locate and display the text corresponding to a fixed area in a corresponding position of the text area when it is detected that the fixed area of the amplified display area is touched and a subsequent position of the fixed area is not touched; or a selection module **504** coupled to the display unit **304** and configured to, when it is detected that a continuous area of the amplified display area is touched, perform a predetermined display operation on the continuous text corresponding to the continuous area in corresponding positions of the text area and/or take the continuous text as the selected text.

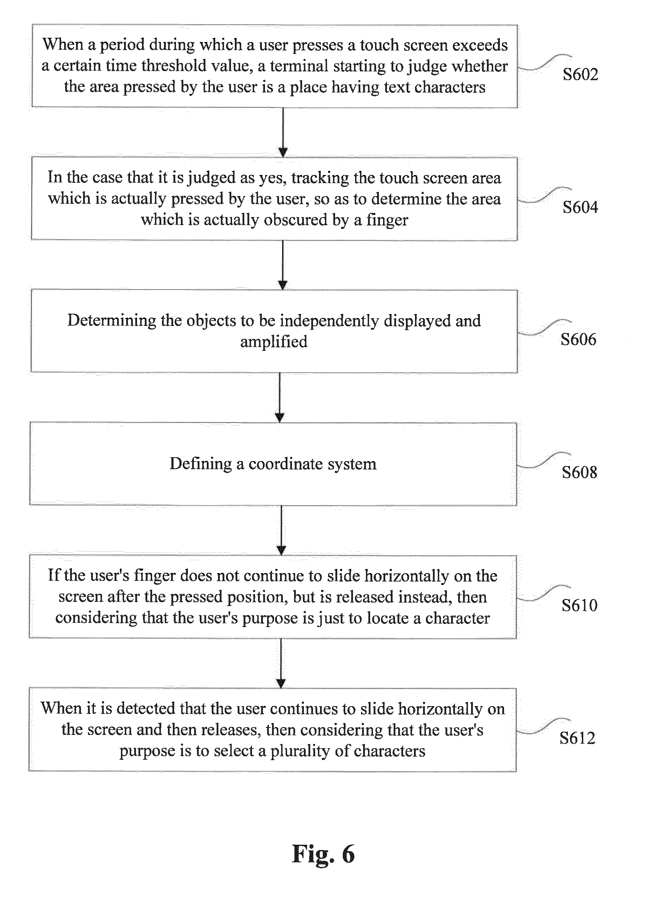

Another embodiment of the present invention also provides a specific application solution for using the above-mentioned method to perform text processing, which, as shown in Fig. 6, includes step S602 to step S612 as below.

Step S602: when a period during which a user presses a touch screen exceeds a certain time threshold value $T_s$, a terminal starts to judge whether the area pressed by the user is a place having text characters, if yes, step S604 is executed; otherwise, the terminal performs no processing.

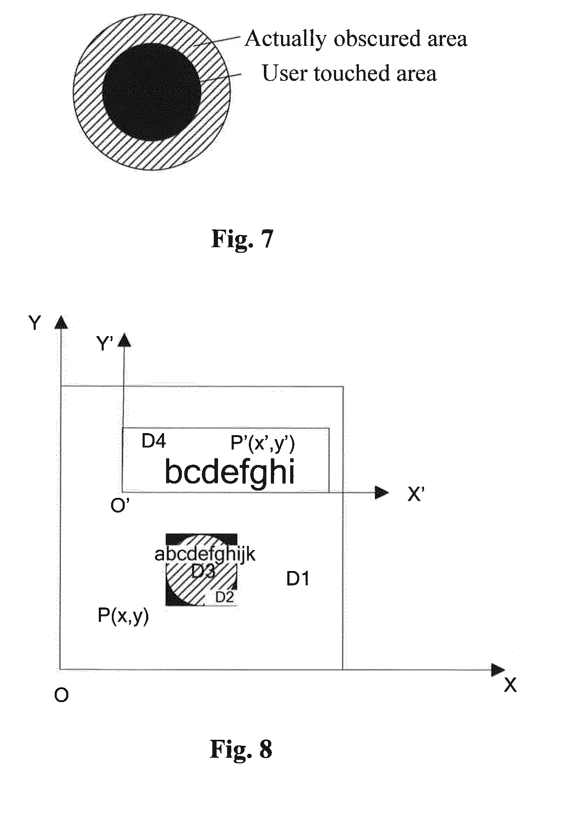

Step S604: as shown in Fig. 7, the touch screen area which is actually pressed by the user is tracked, so as to determine the area which is actually obscured by a finger. In an example embodiment, calculation may be performed according to the approximately circular area as shown in Fig. 7.

$$Rr = Rt + dr$$

where $Rt$ is the maximum radius from the centre which is sensed by the touch screen, $dr$ is a set estimation value, and $Rr$ is an area which is actually obscured and covered by the finger; the area which is actually obscured and covered by the finger can be determined according to the above-mentioned formula.

Step S606: the horizontal characters in a circle the radius of which is $Rr$ are taken as the objects to be independently displayed and amplified. These characters are evenly distributed over the entire width of the screen. In an example embodiment, it is needed to ensure that the interval between characters is obvious enough to improve the display effect.

Step S608: a coordinate system is defined. According to the mode in Fig. 8, assuming that the coordinate system on the original screen is $XOY$, and the coordinate system on the amplified screen is $X'O'Y'$, and at the same time, D1, D2, D3, D4 regions are defined respectively. The meaning of each region and the adopted coordinate system may be as shown in Table 1.

Table 1

| Region | Coordinate System | Meaning |
|---|---|---|
| D1 | $XOY$ | Entire display screen |
| D2 | $XOY$ | Rectangular outline of the area actually obscured by a finger |
| D3 | $XOY$ | Area actually obscured by a finger |
| D4 | $X'O'Y'$ | Amplified display area |

In order to satisfy the flexibility of text amplification and display, the two coordinate systems have a stretch and translation relation between them. The specific conversion of the transformation relation may be achieved according to the following steps.

Assuming that the coordinate value of O' in the XOY coordinate system is $(x_0, y_0)$, the length and width of the area D2 are a and b respectively, and the length and width of D4 are *a'* and *b'* respectively, then M and N may respectively be defined as the transformation proportion of the length and width mapped from D2 to D4:

$$M = a'/a$$

$$N = b'/b$$

thus, it can be deduced that the transformation relation between any point (*x, y*) in XOY and any point (*x', y'*) in the X'O'Y' coordinate system is:

$$x' = (x - x_0)*M$$

$$y' = (y - y_0)*M$$

and the transformation relation between any point (*x, y*) in X'O'Y' and any point (*x', y'*) in the XOY coordinate system is:

$$x = \frac{x'}{M} + x_0$$

$$y = \frac{y'}{M} + y_0$$

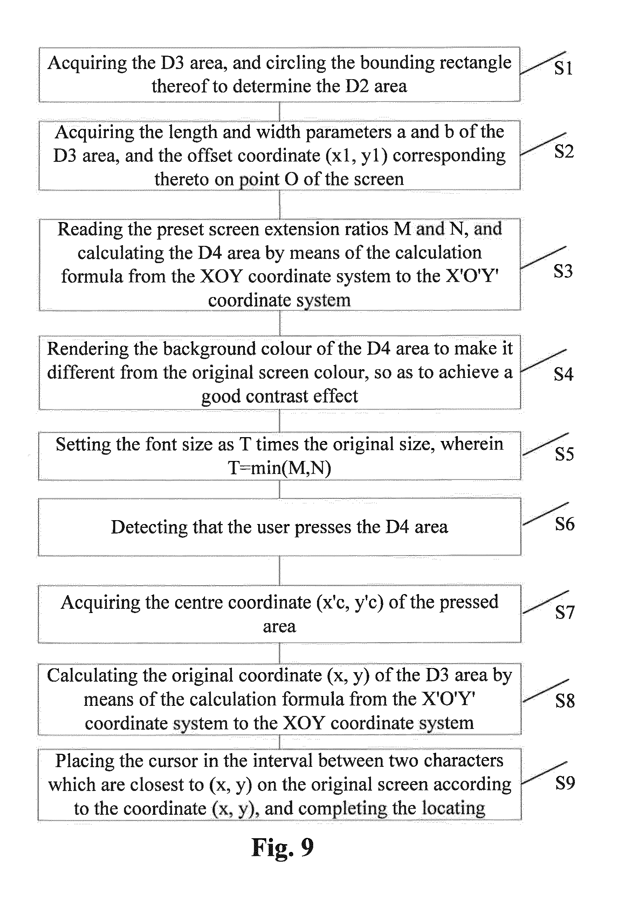

Step S610: when the user presses the amplification area, the start position of the pressing is recorded; if the user's finger does not continue to slide horizontally on the screen after the pressing, but is released instead, then it is considered that the user's purpose is just to locate a character, and in this case the amplification area disappears, the cursor position of the original text moves to the front of the character which is located by the user just now. Detailed locating processing steps may be executed according to the steps shown in Fig. 9, which include:

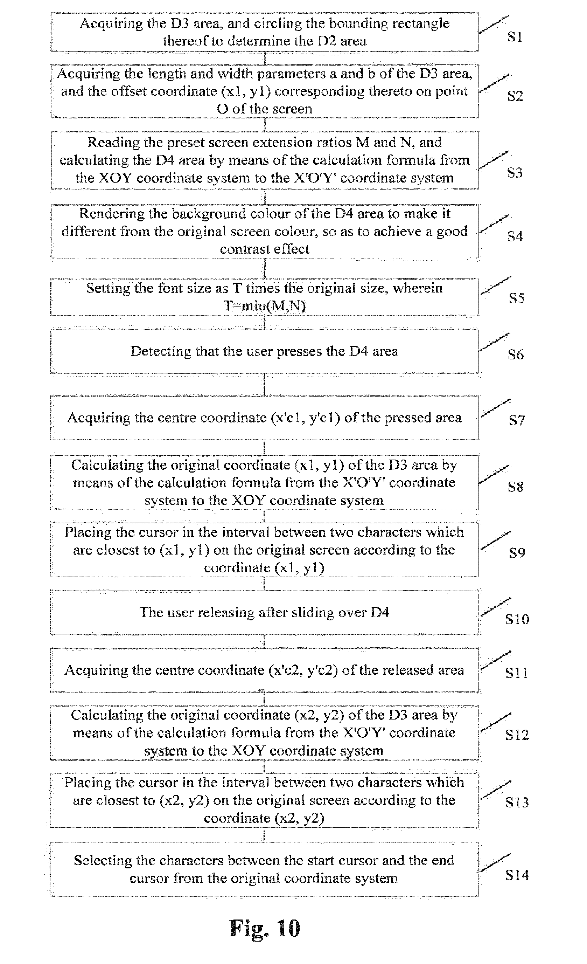

Step S1: acquiring the D3 area, and circling the bounding rectangle thereof to determine the D2 area;
Step S2: acquiring the length and width parameters a and b of the D3 area, and the offset coordinate (*x*1, *y*1) corresponding thereto on point O of the screen;
Step S3: reading the preset screen extension ratios M and N, and calculating the D4 area by means of the calculation formula from the XOY coordinate system to the *X'O'Y'* coordinate system;
Step S4: rendering the background colour of the D4 area to make it different from the original screen colour, so as to achieve a good contrast effect;
Step S5: setting the font size as T times the original size, wherein T = min(M, N);
Step S6: detecting that the user presses the D4 area;
Step S7: acquiring the centre coordinate (x'c, y'c) of the pressed area;
Step S8: calculating the original coordinate (*x, y*) of the D3 area by means of the calculation formula from the *X'O'Y'* coordinate system to the XOY coordinate system;
Step S9: placing the cursor in the interval between two characters which are closest to (x, y) on the original screen according to the coordinate (x, y), and completing the locating.
Step S612: when the user presses the amplification area, the start position of the pressing is recorded; when it is detected that the user continues to slide horizontally on the screen and then releases, then it is considered that the user's purpose is to select a plurality of characters, and the position of the character where the sliding ends is recorded. In this case, the amplification area disappears, the characters from the start position to the end position of the original text selected by the user are selected and displayed in highlight. The detailed selection processing operation may be achieved using the steps shown in Fig. 10, including:

Step S1: acquiring the D3 area, and circling the bounding rectangle thereof to determine the D2 area;
Step S2: acquiring the length and width parameters a and b of the D3 area, and the offset coordinate (x1, y1) corresponding thereto on point O of the screen;

Step S3: reading the preset screen extension ratios M and N, and calculating the D4 area by means of the calculation formula from the XOY coordinate system to the *X'O'Y'* coordinate system;

Step S4: rendering the background colour of the D4 area to make it different from the original screen colour, so as to achieve a good contrast effect;

Step S5: setting the font size as T times the original size, wherein T = min(M, N);

Step S6: detecting that the user presses the D4 area;

Step S7: acquiring the centre coordinate (x'cl, y'c1) of the pressed area;

Step S8: calculating the original coordinate ($x1$, $y1$) of the D3 area by means of the calculation formula from the *X'O'Y'* coordinate system to the XOY coordinate system;

Step S9: placing the cursor in the interval between two characters which are closest to ($x1$, $y1$) on the original screen according to the coordinate ($x1$, $y1$);

Step S10: the user releasing after sliding over D4;

Step S11: acquiring the centre coordinate (x'c2, y'c2) of the released area;

Step S12: calculating the original coordinate ($x2$, $y2$) of the D3 area by means of the calculation formula from the *X'O'Y'* coordinate system to the XOY coordinate system;

Step S13: placing the cursor in the interval between two characters which are closest to (x2, y2) on the original screen according to the coordinate ($x2$, y2);

Step S14: selecting the characters between the start cursor and the end cursor from the original coordinate system.

By means of the embodiments of the present invention, a friendly character locating and inputting method is proposed according to the use habit and finger area characteristics of a user. The cost for amplifying the text area of a touch screen is relatively low, and meanwhile it is not necessary to specially increase the hardware cost, and the success rate and accuracy of the selection can be significantly improved, especially in aspects like webpage browsing, or webpage selection, or text file content selection, thereby solving the bottleneck problem in the accuracy of text location and selection by an intelligent terminal, and improving the effect of the user experience.

In another embodiment, software is also provided, which is used for executing the above-mentioned embodiments and the technical solutions described in the example embodiments.

In another embodiment, a storage medium is also provided, which stores the above-mentioned software and includes but not limited to: a compact disk, a floppy disk, a hard disk, an erasable storage, etc.

It can be seen from the above description that the embodiments of the present invention achieve the following technical effect. When it is detected that a user is performing a locating or selecting operation on the text in a text area on a touch screen, the text in the text area touched by the user is amplified and displayed, and then corresponding processing is performed on the text according to an operation of the user in an amplified area. The above-mentioned method solves the technical problem in the related art that the probability of unintended operations of a user is increased due to the fact that the text displayed on a display screen is too small, and achieves the technical effect of reducing the possibility of unintended operations occurring when a user locates or selects the text.

Obviously, those skilled in the art should know that each of the mentioned modules or steps of the present invention can be realized by universal computing devices; the modules or steps can be focused on single computing device, or distributed on the network formed by multiple computing devices; selectively, they can be realized by the program codes which can be executed by the computing device; thereby, the modules or steps can be stored in the storage device and executed by the computing device; and under some circumstances, the shown or described steps can be executed in different orders, or can be independently manufactured as each integrated circuit module, or multiple modules or steps thereof can be manufactured to be single integrated circuit module, thus to be realized. In this way, the present invention is not restricted to any particular hardware and software combination.

The descriptions above are only example embodiments of the present invention, which are not used to restrict the present invention. For those skilled in the art, the present invention may have various changes and variations. Any amendments, equivalent substitutions, improvements, etc. within the principle of the present invention are all included in the scope of protection as defined by the appended claims of the present invention

**Claims**

1. A text processing method, **characterized by** comprising:

determining that a period during which a text area on a touch screen is touched reaches a threshold value;
amplifying and displaying text in the text area on the touch screen corresponding to the text area; and

according to an operation detected in an amplified display area, processing the text in the text area.

2. The method according to claim 1, **characterized in that** the amplifying and displaying the text in the text area on the touch screen corresponding to the text area comprises:

determining an actually obscured area of the touch screen according to a radius of the touched text area; and amplifying and displaying the text in the actually obscured area.

3. The method according to claim 2, **characterized in that** the determining the actually obscured area of the touch screen according to the radius of the touched text area comprises:

determining the radius of the touched text area;
taking a sum of the radius of the touched text area and a predetermined value as the radius of the actually obscured area; and
taking a corresponding circle, which takes a centre of the touched text area as an origin and takes the radius of the actually obscured area as a radius, as the actually obscured area.

4. The method according to any one of claims 1 to 3, **characterized in that** the processing the text in the text area according to the operation detected in the amplified display area comprises:

when it is detected that a fixed area of the amplified display area is touched and a subsequent position of the fixed area is not touched, locating and displaying the text corresponding to the fixed area in a corresponding position of the text area; or
when it is detected that a continuous area of the amplified display area is touched, performing a predetermined display operation on continuous text corresponding to the continuous area in corresponding positions of the text area and/or taking the continuous text as selected text.

5. The method according to claim 4, **characterized in that** the locating and displaying comprise moving a cursor position to the front of the text corresponding to the fixed area in the text area, and the predetermined display operation comprises highlighted display.

6. The method according to any one of claims 1 to 3, **characterized in that** the amplifying and displaying the text in the text area on the touch screen corresponding to the text area comprises:

determining a proportion for amplifying and displaying the text according to an area of a currently touched text area and an area of the amplified display area; and
amplifying and displaying the text according to the proportion for amplifying and displaying the text.

7. A text processing device, **characterized by** comprising:

a determination unit configured to determine that a period during which a text area on a touch screen is touched reaches a threshold value;
a display unit configured to amplify and display text in the text area on the touch screen corresponding to the text area; and
a processing unit configured to process the text in the text area according to an operation detected in an amplified display area.

8. The device according to claim 7, **characterized in that** the display unit comprises:

a determination module configured to determine an actually obscured area of the touch screen according to a radius of the touched text area; and
a display module configured to amplify and display the text in the actually obscured area.

9. The device according to claim 8, **characterized in that** the determination module comprises:

a determination submodule configured to determine the radius of the touched text area;
an addition submodule configured to take a sum of the radius of the touched text area and a predetermined value as the radius of the actually obscured area; and

a calculation submodule configured to take a corresponding circle, which takes a centre of the touched text area as an origin and takes the radius of the actually obscured area as a radius, as the actually obscured area.

10. The device according to any one of claims 7 to 9, **characterized in that** the processing unit comprises:

a locating and displaying module configured to locate and display text corresponding to a fixed area in a corresponding position of the text area when it is detected that the fixed area of the amplified display area is touched and a subsequent position of the fixed area is not touched; or

a selection module configured to, when it is detected that a continuous area of the amplified display area is touched, perform a predetermined display operation on continuous text corresponding to the continuous area in corresponding positions of the text area and/or take the continuous text as selected text.

Determining that a period during which a text area on a touch screen is touched reaches a threshold value — S102

Amplifying and displaying the text in the text area on the touch screen corresponding to the text area — S104

According to an operation detected in an amplified display area, processing the text in the text area — S106

**Fig. 1**

Determining the radius of the touched text area — S202

Taking the sum of the radius of the touched text area and a predetermined value as the radius of the actually obscured area — S204

Taking a corresponding circle which takes the centre of the touched text area as the origin and takes the radius of the actually obscured area as the radius as the actually obscured area — S206

**Fig. 2**

Determination
unit 302

Display unit
304

Processing unit
306

**Fig. 3**

Determination unit
302

Determination
module 402

Display module
404

Display unit 304

Processing unit
306

**Fig. 4**

Determination
unit 302

Display unit
304

Locating and
displaying module 502

Selection
module 504

Processing unit 306

**Fig. 5**

When a period during which a user presses a touch screen exceeds a certain time threshold value, a terminal starting to judge whether the area pressed by the user is a place having text characters — S602

In the case that it is judged as yes, tracking the touch screen area which is actually pressed by the user, so as to determine the area which is actually obscured by a finger — S604

Determining the objects to be independently displayed and amplified — S606

Defining a coordinate system — S608

If the user's finger does not continue to slide horizontally on the screen after the pressed position, but is released instead, then considering that the user's purpose is just to locate a character — S610

When it is detected that the user continues to slide horizontally on the screen and then releases, then considering that the user's purpose is to select a plurality of characters — S612

**Fig. 6**

**Fig. 7**

**Fig. 8**

Acquiring the D3 area, and circling the bounding rectangle thereof to determine the D2 area — S1

Acquiring the length and width parameters a and b of the D3 area, and the offset coordinate (x1, y1) corresponding thereto on point O of the screen — S2

Reading the preset screen extension ratios M and N, and calculating the D4 area by means of the calculation formula from the XOY coordinate system to the X'O'Y' coordinate system — S3

Rendering the background colour of the D4 area to make it different from the original screen colour, so as to achieve a good contrast effect — S4

Setting the font size as T times the original size, wherein T=min(M,N) — S5

Detecting that the user presses the D4 area — S6

Acquiring the centre coordinate (x'c, y'c) of the pressed area — S7

Calculating the original coordinate (x, y) of the D3 area by means of the calculation formula from the X'O'Y' coordinate system to the XOY coordinate system — S8

Placing the cursor in the interval between two characters which are closest to (x, y) on the original screen according to the coordinate (x, y), and completing the locating — S9

## Fig. 9

Acquiring the D3 area, and circling the bounding rectangle thereof to determine the D2 area — S1

Acquiring the length and width parameters a and b of the D3 area, and the offset coordinate (x1, y1) corresponding thereto on point O of the screen — S2

Reading the preset screen extension ratios M and N, and calculating the D4 area by means of the calculation formula from the XOY coordinate system to the X'O'Y' coordinate system — S3

Rendering the background colour of the D4 area to make it different from the original screen colour, so as to achieve a good contrast effect — S4

Setting the font size as T times the original size, wherein T=min(M,N) — S5

Detecting that the user presses the D4 area — S6

Acquiring the centre coordinate (x'c1, y'c1) of the pressed area — S7

Calculating the original coordinate (x1, y1) of the D3 area by means of the calculation formula from the X'O'Y' coordinate system to the XOY coordinate system — S8

Placing the cursor in the interval between two characters which are closest to (x1, y1) on the original screen according to the coordinate (x1, y1) — S9

The user releasing after sliding over D4 — S10

Acquiring the centre coordinate (x'c2, y'c2) of the released area — S11

Calculating the original coordinate (x2, y2) of the D3 area by means of the calculation formula from the X'O'Y' coordinate system to the XOY coordinate system — S12

Placing the cursor in the interval between two characters which are closest to (x2, y2) on the original screen according to the coordinate (x2, y2) — S13

Selecting the characters between the start cursor and the end cursor from the original coordinate system — S14

## Fig. 10